# EUROPÄISCHE PATENTSCHRIFT

(11) **EP 4 594 139 B1**
(45) Veröffentlichungstag und Bekanntmachung des Hinweises auf die Patenterteilung: **08.07.2026**
(21) Anmeldenummer: 23767876.8
(22) Anmeldetag: 06.09.2023
(51) Int. Cl.: B60P 7/08, B60P 7/12, B60K 15/067, B60K 15/07, F17C 1/00

(54) **SICHERUNGSSYSTEM ZUM SICHERN EINES DRUCKTANKS**
SECURING SYSTEM FOR SECURING A PRESSURE TANK
SYSTÈME DE FIXATION POUR FIXER UN RÉSERVOIR SOUS PRESSION

(30) Priorität: 27.09.2022 DE 102022124829
(43) Veröffentlichungstag der Anmeldung: 06.08.2025
(73) Patentinhaber: NORMA Germany GmbH, 63477 Maintal (DE)
(72) Erfinder: ADSIZ, Tarik, 63477 Maintal (DE)
(74) Vertreter: Kusche, Robert
(86) Internationale Anmeldenummer: PCT/EP2023/074466
(87) Internationale Veröffentlichungsnummer: WO 2024/068216

(56) Entgegenhaltungen:
- EP-A1- 3 078 533
- US-A1- 2016 096 495

## Beschreibung

Die vorgestellte Erfindung betrifft ein Kopplungssystem, ein Sicherungssystem, ein Drucktanksystem und ein Verfahren zum Sichern eines Drucktanks gemäß den beigefügten Ansprüchen.

Drucktanks werden häufig zum Speichern von Fluiden verwendet. Dazu werden Fluide, wie bspw. Gase oder Flüssigkeiten unter Druck, in der Regel unter hohem Druck in einen Drucktank geleitet. Dadurch dehnt sich der Drucktank aus bzw. vergrößert sich in seinem Querschnitt. Daher sollten Drucktanks nicht fest gelagert werden, um eine Expansion beim Befüllen nicht zu stören.

Es sind Sicherungssysteme bekannt, bei denen Drucktanks mit vorgespannten Gurten an einem Rahmen gesichert werden. Dabei liegt eine erhebliche Belastung auf jeweiligen Verbindern zum Verbinden von Gurt und Rahmen, da diese bspw. bei einem Unfall in einem Fahrzeug mit enormen Beschleunigungskräften durch den Drucktank beaufschlagt werden.

EP 3 078 533 A1 offenbart ein Kopplungssystem, das dem Präambel von Anspruch 1 ähnelt.

Es ist daher eine Aufgabe der vorliegenden Erfindung eine verbesserte Möglichkeit zum Sichern eines Druckgastanks bereitzustellen.

Es wird somit gemäß einem ersten Aspekt der vorgestellten Erfindung ein Kopplungssystem zum mechanischen Koppeln von Gurten vorgestellt. Das Kopplungssystem umfasst eine Anzahl Kopplungsschnittstellen, wobei jede Kopplungsschnittstelle der Anzahl Kopplungsschnittstellen eine Stange, ein Federelement, einen Federwegsbegrenzer, ein Verbindungselement und ein Sicherungselement umfasst, wobei das Verbindungselement beweglich an der Stange angeordnet und dazu konfiguriert ist, mit einem Gurt verbunden zu werden, wobei das Sicherungselement fest an der Stange angeordnet ist, wobei das Federelement zwischen dem Verbindungselement und dem Sicherungselement angeordnet ist, wobei der Federwegsbegrenzer zwischen dem Verbindungselement und dem Sicherungselement an der Stange angeordnet ist und wobei der Federwegsbegrenzer kürzer als das Federelement ist, so dass der Federwegsbegrenzer einen Kraftschluss zwischen dem Verbindungselement, einem mit dem Verbindungselement verbundenen Gurt und der Stange herstellt, wenn das Verbindungselement mit einer vorgegebenen Kraft in Richtung des Sicherungselements drückt.

Unter einem Gurt ist im Kontext der vorgestellten Erfindung ein Materialstreifen, wie bspw. ein Band aus Metall und/oder Kunststoff und/oder einem Textilgewebe zu verstehen.

Unter einem Federelement ist im Kontext der vorgestellten Erfindung ein elastisches, d.h. reversibel verformbares Element, wie bspw. eine mechanische Feder zu verstehen.

Das vorgestellte Kopplungssystem basiert auf dem Prinzip, dass ein an dem Verbindungselement einer jeweiligen Kopplungsschnittstelle angeordneter Gurt aufgrund der beweglichen Lagerung des Verbindungselements selbst beweglich ist, so dass sich ein durch den Gurt gesicherter Drucktank ausdehnen und zusammenziehen kann, ohne seinen Kontakt zu dem Gurt zu verlieren.

Insbesondere ist das Verbindungselement dazu konfiguriert, in eine durch einen Gurt gebildete Schlaufe einzugreifen. Selbstverständlich kann ein jeweiliger Gurt auch anderweitig, bspw. durch eine Verschraubung oder eine Verklemmung mit dem Verbindungselement verbunden sein.

Durch den erfindungsgemäß vorgesehenen Federwegsbegrenzer wird ein Kraftschluss zwischen dem Verbindungselement und einem an dem Verbindungselement angeordneten Gurt mit dem Sicherungselement und, dadurch bedingt, mit der Stange bewirkt, wenn das Federelement komprimiert ist bzw. das Verbindungselement den Federwegsbegrenzer auf das Sicherungselement drückt. Dies bedeutet, dass in einem komprimierten Zustand des Federelements der Kraftfluss zwischen dem Kopplungssystem und einem zu sichernden Drucktank durch einen "Bypass" um das Federelement herum geleitet und, dadurch bedingt, das Federelement entlastet wird.

Weiterhin bedeutet dies, dass in einem komprimierten Zustand des Federelements das Kopplungssystem starr bzw. steif ist, so dass eine weitere Kraftbeaufschlagung über einen Punkt, an dem der Federwegsbegrenzer auf das Sicherungselement drückt hinaus, zu einer direkten Krafteinkopplung in die Stange und einen jeweiligen Gurt führt. Entsprechend wird eine Verformung eines jeweiligen Drucktanks bis zu einer vorgegebenen geometrischen Grenze durch das Federelement toleriert, so dass das Kopplungssystem sich mit dem Drucktank zusammen verformt. Bei einer Verformung das Drucktanks über die vorgegebene geometrische Grenze hinaus, bspw. wenn der Drucktank sich bei einem Aufprall auf ein Hindernis aus seiner Halterung heraus bewegt, wird die Verformungstoleranz des Kopplungssystems überschritten und das Kopplungssystem verhält sich starr, um den Drucktank in seiner Position zu sichern. Entsprechend wechselt das Kopplungssystem zwischen zwei Zuständen, einem komprimierten Zustand mit einer vorgegebenen Haltekraft und einem starren Zustand mit einer maximalen Haltekraft.

Ferner bewirkt der Federwegsbegrenzer eine Begrenzung einer möglichen Krafteinkopplung in das Federelement, so dass das Federelement vor übermäßiger Belastung geschützt wird und Materialfehler aufgrund einer Überbeanspruchung vermieden werden. Entsprechend kann eine Lebenszeit bzw. Haltbarkeitsdauer des Federelements und, dadurch bedingt, eine Lebenszeit bzw. Haltbarkeitsdauer des Kopplungssystems unabhängig von dessen Einsatzart zuverlässig und exakt angegeben werden.

Dadurch bedingt, dass der Federwegsbegrenzer kürzer ist als das Federelement, kann das Federelement sich innerhalb eines vorgegebenen Bereichs, nämlich bis zu einem Anschlag des Federwegsbegrenzers komprimieren und sich bis zu einer maximalen Auslenkposition des Verbindungselements ausdehnen.

Durch die Auslenkung des Federelements wird ein jeweiliger an dem Verbindungselement angeordneter Gurt unter mechanischer Spannung gehalten, auch wenn ein jeweiliger Drucktank sich zusammenzieht. Dabei bedingt eine Länge eines Abstands zwischen der maximalen Auslenkposition des Verbindungselements und dem Sicherungselement sowie eine Federkonstante des Federelements eine Haltekraft, mit der der Gurt bzw. das Kopplungssystem auf den Drucktank einwirkt. Entsprechend kann durch Justierung bzw. Verschiebung des Sicherungselements an der Stange die Haltekraft eingestellt werden.

Es kann vorgesehen sein, dass die Stange lediglich bereichsweise ein Gewinde zum Aufschrauben des Sicherungselements aufweist, wobei das Sicherungselement eine Schraubmutter ist, und wobei das Gewinde in einem Bereich endet, der im entspannten Zustand des Kopplungssystems um einen Abstand von dem Verbindungselement beabstandet ist, der größer ist als eine Länge des Federwegsbegrenzers.

Ein lediglich bereichsweise an der Stange ausgebildetes Gewinde zum Aufschrauben des Sicherungselements gibt eine Haltekraft, mit der das Kopplungssystem einen jeweiligen Drucktank in einer entspannten Stellung des Federelements sichert, vor. Entsprechend kann eine Länge des Gewindes angepasst werden, um die Haltekraft anzupassen. Selbstverständlich kann auch eine Position des Sicherungselements an der Stange verändert werden, um die Haltekraft anzupassen.

Ferner bewirkt ein bereichsweise ausgebildetes Gewinde, dass das Federelement mit einem vorgegebenem Drehmoment beaufschlagt wird, um das Kopplungssystem zu spannen.

Insbesondere ist vorgesehen, dass das Sicherungselement eine Schraubmutter und eine Kontaktscheibe umfasst, so dass das Federelement mit dem Sicherungselement über die Kontaktscheibe in Kontakt steht.

Es kann weiterhin vorgesehen sein, dass das Sicherungselement ein fester Materialüberstand der Stange ist, der in einem Bereich endet, der im entspannten Zustand des Kopplungssystems um einen Abstand von dem Verbindungselement beabstandet ist, der größer ist als eine Länge des Federwegsbegrenzers.

Ein fester Materialüberstand, wie bspw. ein Schaft, der bei der Herstellung der Stange bspw. gedreht oder angeschweißt werden kann, bewirkt eine exakt vorgegebene Haltekraft des Kopplungssystems.

Es kann weiterhin vorgesehen sein, dass der Federwegsbegrenzer beweglich zwischen dem Verbindungselement und dem Sicherungselement an der Stange angeordnet ist oder fest an dem Sicherungselement angeordnet ist.

Ein fest an dem Sicherungselement angeordneter Federwegsbegrenzer kann bspw. als integraler bzw. monolithischer Bestandteil des Sicherungselements ausgestaltet sein. Ein beweglich ausgestalteter Federwegbegrenzer kann bspw. hohl sein und um die Stange herum geführt, d.h. auf der Stange angeordnet sein.

Es kann weiterhin vorgesehen sein, dass das Kopplungssystem zwei Kopplungsschnittstellen umfasst, die gemeinsam an einer Stange angeordnet sind.

Zwei an einer gemeinsamen Stange angeordnete Kopplungsschnittstellen ermöglichen eine Verbindung zweier Gurte durch ein kompaktes Kopplungssystem, bei dem in einem komprimierten Zustand der beiden Federelemente ein Kraftschluss zwischen der Stange und den beiden Gurten hergestellt wird. Dabei kann bspw. ein fest an einem ersten Ende der Stange ausgebildetes Sicherungselement und ein an einem dem ersten Ende gegenüberliegenden zweiten Ende aufgeschraubtes Sicherungselement vorgesehen sein, so dass sämtliche Komponenten der zwei Kopplungsschnittstellen auf die Stange aufgeschoben und final durch das aufgeschraubte Sicherungselement gesichert werden können.

Gemäß einem zweiten Aspekt betrifft die vorgestellte Erfindung ein Sicherungssystem zum Sichern eines runden Drucktanks. Das Sicherungssystem umfasst ein Gurtsystem und eine Anzahl möglicher Ausgestaltungen des vorgestellten Kopplungssystems, wobei das Gurtsystem eine Vielzahl Gurte umfasst, wobei das Gurtsystem dazu konfiguriert ist, mit einem ersten Haltepunkt und einem zweiten Haltepunkt verbunden zu werden und den Drucktank zwischen dem ersten Haltepunkt und dem zweiten Haltepunkt zu umgreifen und wobei das Gurtsystem mit der Anzahl Kopplungssysteme mechanisch gekoppelt ist.

Das vorgestellte Sicherungssystem dient insbesondere zum Sichern eines Drucktanks an eine Anzahl, insbesondere zwei Haltepunkten.

Es kann vorgesehen sein, dass das Gurtsystem einen ersten Gurt umfasst, der an seinem ersten Ende mit dem ersten Haltpunkt verbindbar ist und an seinem zweiten Ende mit einem Verbindungselement eines Kopplungssystems der Anzahl Kopplungssysteme verbunden ist, und
das Gurtsystem einen zweiten Gurt umfasst, der an seinem zweiten Ende mit dem zweiten Haltepunkt verbindbar ist und an seinem zweiten Ende mit einem Verbindungselement eines Kopplungssystems der Anzahl Kopplungssystem verbunden ist.

Ein Sicherungssystem mit einem Gurtsystem aus insbesondere zwei Gurten, die in ein Kopplungssystem eingreifen, so dass das Kopplungssystem die Gurte verbindet, stellt einen Kraftschluss zwischen mit den Gurten verbundenen Haltepunkten, den Gurten und dem Kopplungssystem bereit. Entsprechend ermöglicht das Sicherungssystem ein Sichern eines Drucktanks an jeweiligen Haltepunkten. Dazu können die Gurte mit jeweiligen Haltepunkten verbunden, insbesondere in die Haltepunkte eingehakt oder mit den Haltepunkten verschraubt bzw. verklemmt sein. Bspw. kann ein Gurt eine Lasche formen, in die ein bspw. hakenförmiger Haltepunkt eingreift.

Es kann weiterhin vorgesehen sein, dass das Sicherungssystem ein erstes Kopplungssystem und ein zweites Kopplungssystem umfasst. Dabei kann vorgesehen sein, dass das Gurtsystem drei Gurte umfasst, wobei ein erster Gurt des Gurtsystems an seinem ersten Ende mit dem ersten Haltepunkt verbindbar ist und an seinem zweiten Ende mit einem ersten Verbindungselement des ersten Kopplungssystems verbunden ist, wobei ein zweiter Gurt des Gurtsystems an seinem ersten Ende mit einem zweiten Verbindungselement des ersten Kopplungssystems und an seinem zweiten Ende mit einem ersten Verbindungselement des zweiten Kopplungssystems verbunden ist und wobei ein dritter Gurt des Gurtsystems an seinem ersten Ende mit einem zweiten Verbindungselement des zweiten Kopplungssystems verbunden ist und an seinem zweiten Ende mit dem zweiten Haltepunkt verbindbar ist.

Ein Gurtsystem aus drei Gurten und zwei Kopplungssystemen ermöglicht eine Sicherung von besonders großvolumigen Drucktanks. Dabei kann ein zweiter Gurt, der mit beiden Kopplungssystemen verbunden ist, bspw. in seiner Länge angepasst werden, um sich einem Volumen des Drucktanks anzupassen.

Gemäß einem dritten Aspekt betrifft die vorgestellte Erfindung ein Drucktanksystem zum Speichern eines Fluids. Das Drucktanksystem umfasst einen runden, insbesondere zylindrischen Drucktank, einen Rahmen mit einem ersten Haltepunkt und einem zweiten Haltepunkt und eine mögliche Ausgestaltung des vorgestellten Sicherungssystems, wobei das Sicherungssystem den Drucktank zumindest bereichsweise umhüllt und wobei das Sicherungssystem mit dem ersten Haltepunkt und dem zweiten Haltepunkt verbunden ist.

Ein Drucktanksystem mit einem Rahmen, an dem das Sicherungssystem angeordnet ist, kann einfach und sicher, unabhängig von einem Füllungszustand, des Drucktanks transportiert werden.

Gemäß einem vierten Aspekt betrifft die vorgestellte Erfindung ein Verfahren zum Sichern eines Drucktanks, bei dem ein Drucktank mit einer möglichen Ausgestaltung des vorgestellten Sicherungssystems an einer Anzahl Haltepunkte gesichert wird. Durch die Federelemente des Sicherungssystems wird der Drucktank auch in einem ungefüllten Zustand mit einer Mindestsicherungskraft an den Haltepunkten gesichert, insbesondere in den Rahmen gedrückt, so dass ein Ausgleiten des Drucktanks aus dem Rahmen auch bei geringen Beschleunigungskräften verhindert wird. Durch die Verbindung des Sicherungssystems zu den Haltepunkten werden bei großen Beschleunigungskräften die Federelemente bis zum Anschlag der Federwegsbegrenzer komprimiert und ein Kraftschluss des Sicherungssystem zu dem Rahmen hergestellt, so dass der Drucktank auch bei großen Beschleunigungskräften sicher in dem Rahmen gehalten wird.

Das vorgestellte Sicherungssystem dient insbesondere zur Durchführung des vorgestellten Verfahrens.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Sicherungssystems mit zwei möglichen Ausgestaltungen des vorgestellten Kopplungssystems,
- Fig. 2: einen Längsschnitt des Sicherungssystems gemäß Fig. 1,
- Fig. 3: eine mögliche Ausgestaltung des vorgestellten Drucktanksystems,
- Fig. 4: einen Querschnitt des Drucktanksystems gemäß Fig. 3,
- Fig. 5: eine Detailansicht eines Kopplungssystems des Drucktanksystems gemäß Fig. 3,
- Fig. 6: eine weitere mögliche Ausgestaltung des vorgestellten Kopplungssystems,

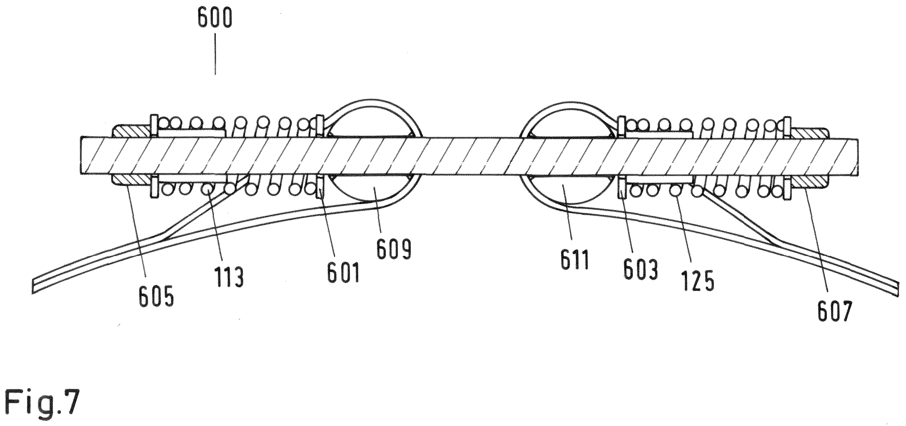

- Fig. 7: einen Längsschnitt des Kopplungssystems gemäß Fig. 6.

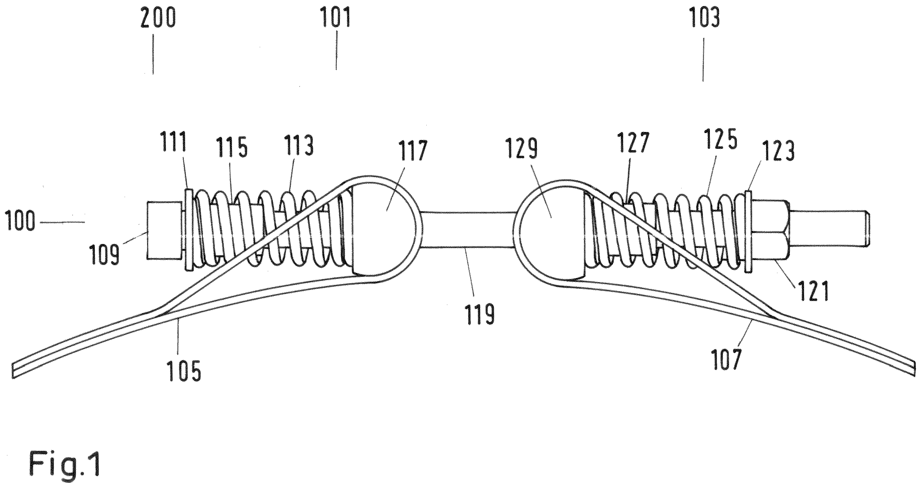

In Fig. 1 ist ein Kopplungssystem 100 dargestellt. Das Kopplungssystem 100 ist Teil eines Sicherungssystems 200 und umfasst eine erste Kopplungsschnittstelle 101 und eine zweite Kopplungsschnittstelle 103 sowie einen ersten Gurt 105 und einen zweiten Gurt 107.

Die erste Kopplungsschnittstelle 101 umfasst ein erstes Sicherungselement 109, eine erste Kontaktscheibe 111, ein erstes Federelement 113, einen ersten Federwegsbegrenzer 115 und ein erstes Verbindungselement 117, die jeweils an einer Stange 119 angeordnet sind.

Das erste Verbindungselement 117 ist zwischen einem ersten Endpunkt, bei dem das erste Federelement 113 vollständig ausgelenkt ist, und einem zweiten Endpunkt, bei dem das erste Verbindungselement 117 auf den ersten Federwegsbegrenzer 115 trifft, beweglich. Optional kann der erste Endpunkt durch einen an der Stange 119 ausgebildeten Anschlag vorgegeben sein.

Der erste Gurt 105 umgreift mit einer Schlaufe das erste Verbindungselement 117, so dass das erste Federelement 113 den ersten Gurt 105 kontinuierlich unter Spannung hält. Wenn der erste Gurt 105 durch bspw. eine Bewegung eines durch den ersten Gurt 105 gesicherten Drucktanks mit einer Zugkraft beaufschlagt wird, zieht bzw. drückt dieser das erste Verbindungselement 117 auf das erste Federelement 113, das sich komprimiert bis das erste Verbindungselement 117 auf den ersten Federwegsbegrenzer 115 trifft und einen Kraftschluss zwischen dem ersten Gurt 105, der ersten Kontaktscheibe 111 und dem ersten Sicherungselement 109 bzw. der Stange 119 ausbildet, so dass eine weitere Bewegung des ersten Gurts 105 verhindert und der Drucktank in seiner Position gesichert wird.

Die zweite Kopplungsschnittstelle 103 umfasst ein zweites Sicherungselement 121, eine zweite Kontaktscheibe 123, ein zweites Federelement 125, einen zweiten Federwegsbegrenzer 127 und ein zweites Verbindungselement 129, die jeweils an der Stange 119 angeordnet sind.

Das zweite Verbindungselement 129 ist zwischen einem ersten Endpunkt, bei dem das zweite Federelement 125 vollständig ausgelenkt ist, und einem zweiten Endpunkt, bei dem das zweite Verbindungselement 129 den zweiten Federwegsbegrenzer 127 auf die zweite Kontaktscheibe 123 drückt, beweglich. Optional kann der zweite Endpunkt durch ein an der Stange 119 bereichsweise ausgebildetes Gewinde vorgegeben sein.

Der zweite Gurt 107 umgreift mit einer Schlaufe das zweite Verbindungselement 129, so dass das zweite Federelement 125 den zweite Gurt 107 kontinuierlich unter Spannung hält. Wenn der zweite Gurt 107 durch bspw. eine Bewegung eines durch den zweiten Gurt 105 gesicherten Drucktanks mit einer Zugkraft beaufschlagt wird, zieht bzw. drückt dieser das zweite Verbindungselement 129 und den zweiten Federwegsbegrenzer 127 auf das zweite Kontaktscheibe 123, so dass sich ein Kraftschluss zwischen dem zweiten Gurt 107, der zweiten Kontaktscheibe 123 und dem zweiten Sicherungselement 121 bzw. der Stange 119 ausbildet, so dass eine weitere Bewegung des zweiten Gurts 107 verhindert und der Drucktank in seiner Position gesichert wird.

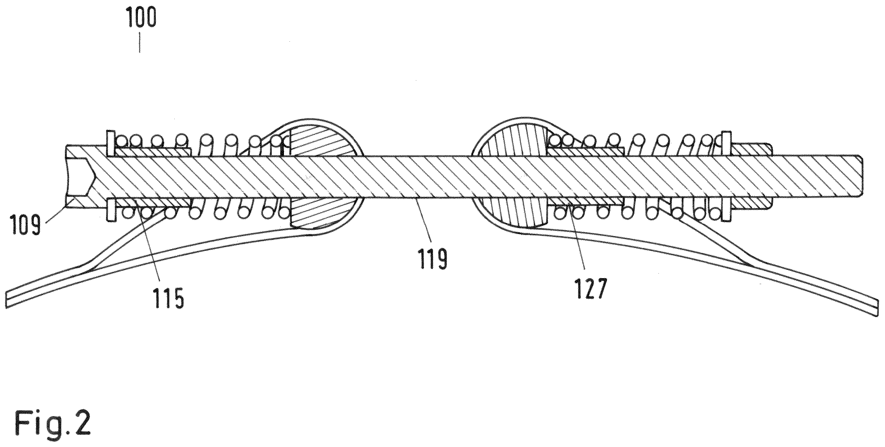

In Fig. 2 ist das Kopplungssystem 100 in einer geschnittenen Ansicht dargestellt. Hier ist erkennbar, dass der erste Federwegsbegrenzer 115 und der zweite Federwegsbegrenzer 127 die Stange 119 umhüllen und dass der erste Sicherungselement 109 ein monolithischer Bestandteil der Stange 119 ist.

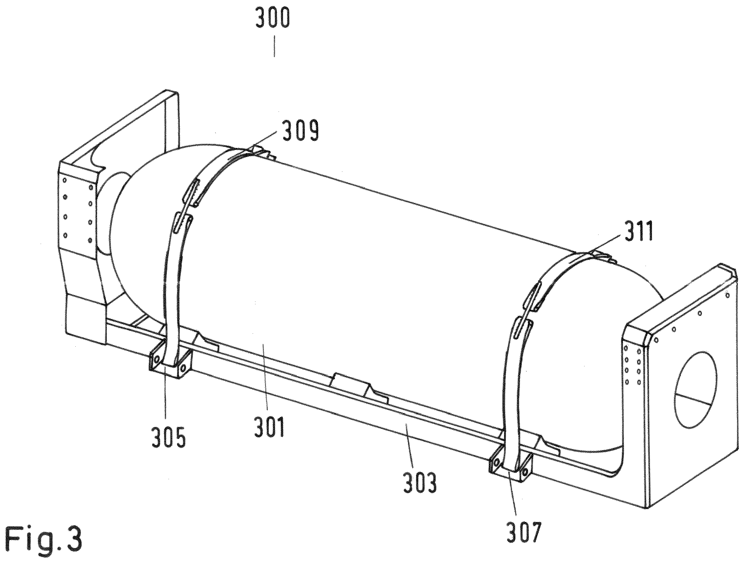

In Fig. 3 ist ein Drucktanksystem 300 dargestellt. Das Drucktanksystem 300 umfasst einen runden Drucktank 301, einen Rahmen 303 mit einem ersten Haltepunkt 305 und einem weiteren Haltepunkt 307 sowie ein erstes Sicherungssystem 309 und ein zweites Sicherungssystem 311.

Durch das erste Sicherungssystem 309 und das zweite Sicherungssystem 311 ist der Drucktank 301 an dem Rahmen 303 gesichert.

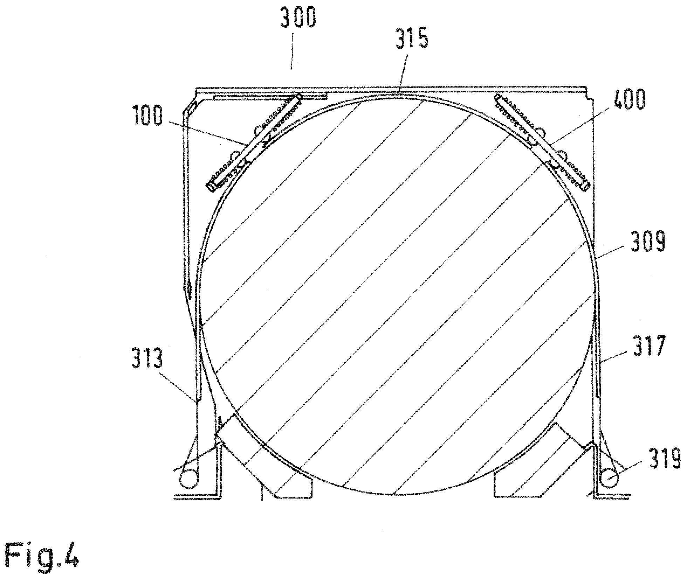

In Fig. 4 ist ein Querschnitt des Drucktanksystems 300 dargestellt. Hier ist erkennbar, dass das erste Sicherungssystem 309 einen ersten Gurt 313, einen zweiten Gurt 315 und einen dritten Gurt 317 umfasst.

Der erste Gurt 313 ist mit einem ersten Kopplungssystem 100 und dem ersten Haltepunkt 307 verbunden.

Der zweite Gurt 315 ist mit dem zweiten Sicherungssystem 311 und dem ersten Kopplungssystem 100 verbunden.

Der dritte Gurt 317 ist mit einem zweiten Kopplungssystem 400 und einem zweiten Haltepunkt 319 verbunden.

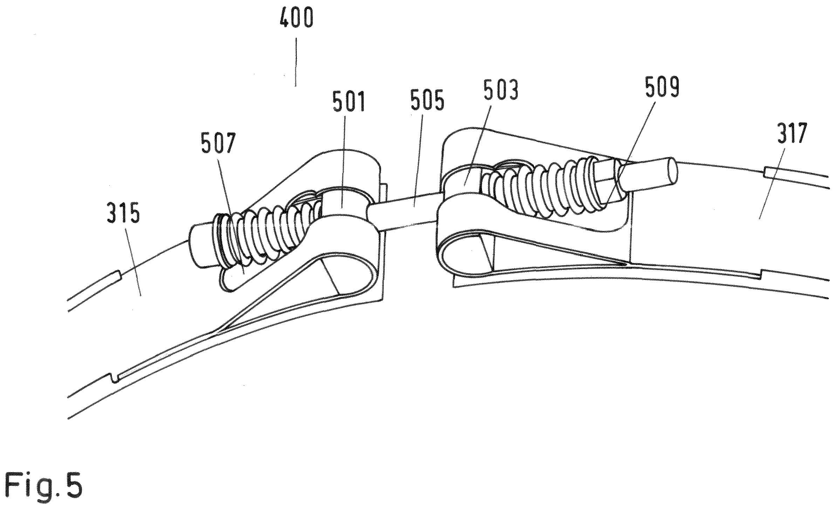

In Fig. 5 ist das zweite Kopplungssystem 400 des Drucktanksystems 300 im Detail dargestellt. Hier ist erkennbar, dass Verbindungselemente 501 und 503 des Kopplungssystems 400 in in dem zweiten Gurt 315 und dem dritten Gurt 317 ausgebildete Laschen eingreifen und eine Stange 505 beidseitig umgeben, so dass die Stange 505 durch Ausnehmungen 507 und 509 in den Laschen geführt ist.

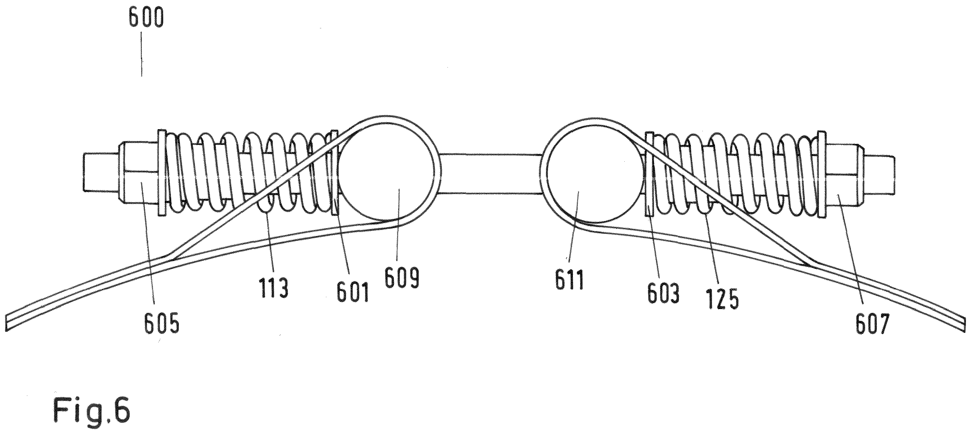

In Fig. 6 ist ein In Fig. 1 ist ein Kopplungssystem 600 dargestellt. Das Kopplungssystem 600 basiert auf dem Kopplungssystem 100 gemäß Fig. 1, wobei eine zusätzliche Kontaktscheibe 601 bzw. 603 zwischen einem ersten Verbindungselement 609 und dem ersten Federelement 113 bzw. einem zweiten Verbindungselement 611 und dem zweiten Federelement 125 angeordnet ist.

Die Form des ersten Verbindungselement 609 und des zweiten Verbindungselements 611 hat sich gegenüber dem Kopplungselement 100 gemäß Fig. 1 derart geändert, dass das erste Verbindungselement 609 und das zweite Verbindungselements 611 keine Abflachung aufweisen bzw. einen vollständig runden Querschnitt haben.

Durch die zusätzlichen Kontaktscheiben 601 und 603 und die runde Form des ersten Verbindungselements 609 und des zweiten Verbindungselements 611 wird eine Bewegung des ersten Verbindungselements 609 direkt auf das erste Federelement 113 übertragen bzw. eine Bewegung des zweiten Verbindungselements 611 direkt auf das zweite Federelement 125 übertragen, so dass ein Bewegungsspiel zwischen den Verbindungselementen 609, 611 und den Federelementen 113, 125 minimiert wird.

Ferner umfasst das Kopplungssystem 600 an beiden Enden eine Schraubverbindung 605, 607, durch die die Federelemente 113, 125 gespannt, d.h. vorgespannt bzw. nachgespannt werden können.

### Bezugszeichenliste

- 100: Kopplungssystem
- 101: Kopplungsschnittstelle
- 103: erster Gurt
- 105: zweiter Gurt
- 107: zweiter Gurt
- 109: erstes Sicherungselement
- 111: erste Kontaktscheibe
- 113: erstes Federelement
- 115: erster Federwegsbegrenzer
- 117: erstes Verbindungselement
- 119: Stange
- 121: zweites Sicherungselement
- 123: zweite Kontaktscheibe
- 125: zweites Federelement
- 127: zweiter Federwegsbegrenzer
- 129: zweites Verbindungselement
- 200: Sicherungssystem
- 300: Drucktanksystem
- 301: Drucktank
- 303: Rahmen
- 305: erster Haltepunkt
- 307: weiterer Haltepunkt
- 309: erstes Sicherungssystem
- 311: zweites Sicherungssystem
- 313: erster Gurt
- 315: zweiter Gurt
- 317: dritter Gurt
- 319: zweiter Haltepunkt
- 400: Kopplungssystem
- 501: Verbindungselement
- 503: Verbindungselement
- 505: Stange
- 507: Ausnehmung
- 509: Ausnehmung
- 600: Kopplungssystem
- 601: Kontaktscheibe
- 603: Kontaktscheibe
- 605: Schraubverbindung
- 607: Schraubverbindung

## Patentansprüche

1. Kopplungssystem (100, 400, 600) zum mechanischen Koppeln von Gurten (105, 107, 313, 315, 317),
wobei das Kopplungssystem (100, 400, 600) eine Anzahl Kopplungsschnittstellen (101, 103) und eine einzelne Stange (119, 505) umfasst,
wobei jede Kopplungsschnittstelle (101, 103) der Anzahl Kopplungsschnittstellen (101, 103) umfasst:
- ein Verbindungselement (117, 129, 501, 503),
- ein Sicherungselement (109, 121),
wobei das Verbindungselement (117, 129, 501, 503) beweglich an der Stange (119, 505) angeordnet und dazu konfiguriert ist, mit einem Gurt (105, 107, 313, 315, 317) verbunden zu werden,
wobei das Sicherungselement (109, 121) fest an der Stange (119, 505) angeordnet ist,
**dadurch gekennzeichnet, dass** jede Kopplungsschnittstelle (101, 103) weiterhin umfasst:
- ein Federelement (113, 125),
- einen Federwegbregrenzer (15, 127),
wobei das Federelement (113, 125) zwischen dem Verbindungselement (117, 129, 501, 503) und dem Sicherungselement (109, 121) angeordnet ist,
wobei der Federwegsbegrenzer (115, 127) zwischen dem Verbindungselement (117, 129, 501, 503) und dem Sicherungselement (109, 121) an der Stange (119, 505) angeordnet ist,
wobei der Federwegsbegrenzer (115, 127) kürzer als das Federelement (113, 125) ist, so dass der Federwegsbegrenzer (115, 127) einen Kraftschluss zwischen dem Verbindungselement (117, 129, 501, 503), einem mit dem Verbindungselement (117, 129, 501, 503) verbundenen Gurt (105, 107, 313, 315, 317) und der Stange (119, 505) herstellt, wenn das Verbindungselement (117, 129, 501, 503) mit einer vorgegebenen Kraft in Richtung des Sicherungselements (109, 121) drückt.

2. Kopplungssystem (100, 400, 600) nach Anspruch 1,
**dadurch gekennzeichnet,**
**dass** die Stange (119, 505) lediglich bereichsweise ein Gewinde zum Aufschrauben des Sicherungselements (109, 121) aufweist,
wobei das Sicherungselement (109, 121) eine Schraubmutter ist, und
wobei das Gewinde in einem Bereich endet, der im entspannten Zustand des Kopplungssystems (100, 400, 600) um einen Abstand von dem Verbindungselement (117, 129, 501, 503) beabstandet ist, der größer ist als eine Länge des Federwegsbegrenzers (115, 127).

3. Kopplungssystem (100, 400, 600) nach Anspruch 1 oder 2,
**dadurch gekennzeichnet,**
**dass** das Sicherungselement (109, 121) ein fester Materialüberstand der Stange (119, 505) ist, der in einem Bereich endet, der im entspannten Zustand des Kopplungssystems (100, 400, 600) um einen Abstand von dem Verbindungselement (117, 129, 501, 503) beabstandet ist, der größer ist als eine Länge des Federwegsbegrenzers (115, 127).

4. Kopplungssystem (100, 400, 600) nach einem der voranstehenden Ansprüche,
**dadurch gekennzeichnet,**
**dass** der Federwegsbegrenzer (115, 127) beweglich zwischen dem Verbindungselement (117, 129, 501, 503) und dem Sicherungselement (109, 121) an der Stange (119, 505) angeordnet ist oder fest an dem Sicherungselement (109, 121) angeordnet ist.

5. Kopplungssystem (100, 400, 600) nach einem der voranstehenden Ansprüche,
**dadurch gekennzeichnet,**
**dass** das Kopplungssystem (100, 400, 600) zwei Kopplungsschnittstellen (101, 103) umfasst, die gemeinsam an einer Stange (119, 505) angeordnet sind.

6. Sicherungssystem (200, 309, 311) zum Sichern eines runden Drucktanks (301), wobei das Sicherungssystem (209, 309, 311) umfasst:
- ein Gurtsystem,
- eine Anzahl Kopplungssysteme (100, 400, 600) nach einem der Ansprüche 1 bis 5,
wobei das Gurtsystem eine Vielzahl Gurte (105, 107, 313, 315, 317) umfasst,
wobei das Gurtsystem dazu konfiguriert ist, mit einem ersten Haltepunkt (307) und einem zweiten Haltepunkt (319) verbunden zu werden und den Drucktank (301) zwischen dem ersten Haltepunkt (307) und dem zweiten Haltepunkt (319) zu umgreifen,
wobei das Gurtsystem mit der Anzahl Kopplungssysteme (100, 400, 600) mechanisch gekoppelt ist.

7. Sicherungssystem (200, 309, 311) nach Anspruch 6,
**dadurch gekennzeichnet,**
**dass** das Gurtsystem einen ersten Gurt (313) umfasst, der an seinem ersten Ende mit dem ersten Haltpunkt (307) verbindbar ist und an seinem zweiten Ende mit einem Verbindungselement (117, 129, 501, 503) eines Kopplungssystems (100, 400, 600) der Anzahl Kopplungssysteme (100, 400, 600) verbunden ist, und
das Gurtsystem einen zweiten Gurt (315) umfasst, der an seinem zweiten Ende mit dem zweiten Haltepunkt (319) verbindbar ist und an seinem zweiten Ende mit einem Verbindungselement (117, 129, 501, 503) eines Kopplungssystems (100, 400, 600) der Anzahl Kopplungssysteme (100, 400, 600) verbunden ist.

8. Sicherungssystem (200, 309, 311) nach Anspruch 6,
**dadurch gekennzeichnet,**
**dass** das Sicherungssystem (200, 309, 311) ein erstes Kopplungssystem (100, 400, 600) nach Anspruch 6 und ein zweites Kopplungssystem (100, 400, 600) nach Anspruch 6 umfasst, und
das Gurtsystem drei Gurte (313, 315, 317) umfasst,
wobei ein erster Gurt (313) des Gurtsystems an seinem ersten Ende mit dem ersten Haltepunkt (307) verbindbar ist und an seinem zweiten Ende mit einem ersten Verbindungselement (117) des ersten Kopplungssystems (100) verbunden ist,
wobei ein zweiter Gurt (315) des Gurtsystems an seinem ersten Ende mit einem zweiten Verbindungselement (129) des ersten Kopplungssystems (100) und an seinem zweiten Ende mit einem ersten Verbindungselement des zweiten Kopplungssystems (100, 400, 600) verbunden ist,
wobei ein dritter Gurt (317) des Gurtsystems an seinem ersten Ende mit einem zweiten Verbindungselement des zweiten Kopplungssystems (100, 400, 600) verbunden ist und an seinem zweiten Ende mit dem zweiten Haltepunkt (319) verbindbar ist.

9. Drucktanksystem (300) zum Speichern eines Fluids,
wobei das Drucktanksystem (300) umfasst:
- einen runden Drucktank (301),
- einen Rahmen (303) mit einem ersten Haltepunkt (307) und einem zweiten Haltepunkt (319),
- ein Sicherungssystem (200) nach einem der Ansprüche 6 bis 8,
wobei das Sicherungssystem (200) den Drucktank (301) zumindest bereichsweise umhüllt, und
wobei das Sicherungssystem (200) mit dem ersten Haltepunkt (307) und dem zweiten Haltepunkt (319) verbunden ist.

10. Verfahren zum Sichern eines Drucktanks (301),
bei dem ein Drucktank (301) mit einem Sicherungssystem (200) nach einem der Ansprüche 6 bis 8 an einer Anzahl Haltepunkte (307, 319) gesichert wird.

## Claims

1. Coupling system (100, 400, 600) for mechanically coupling straps (105, 107, 313, 315, 317),
wherein the coupling system (100, 400, 600) comprises a number of coupling interfaces (101, 103) and a single rod (119, 505);
wherein each coupling interface (101, 103) of the number of coupling interfaces (101, 103) comprises:
- a connecting element (117, 129, 501, 503);
- a securing element (109, 121);
wherein the connecting element (117, 129, 501, 503) is movably disposed on the rod (119, 505) and is configured to be connected to a strap (105, 107, 313, 315, 317); wherein the securing element (109, 121) is fixedly disposed on the rod (119, 505);
**characterized in that** each coupling interface (101, 103) further comprises:
- a spring element (113, 125);
- a spring-travel delimiter (15, 127);
wherein the spring element (113, 125) is disposed between the connecting element (117, 129, 501, 503) and the securing element (109, 121);
wherein the spring-travel delimiter (115, 127) is disposed between the connecting element (117, 129, 501, 503) and the securing element (109, 121) on the rod (119, 505);
wherein the spring-travel delimiter (115, 127) is shorter than the spring element (113, 125) in such a way that the spring-travel delimiter (115, 127) establishes a force fit between the connecting element (117, 129, 501, 503), a strap (105, 107, 313, 315, 317) connected to the connecting element (117, 129, 501, 503), and the rod (119, 505) when the connecting element (117, 129, 501, 503) pushes by way of a defined force in the direction of the securing element (109, 121).

2. Coupling system (100, 400, 600) according to Claim 1,
**characterized**
**in that** the rod (119, 505) has a thread for screwing the securing element (109, 121) thereto only in regions; wherein the securing element (109, 121) is a threaded nut; and
wherein the thread ends in a region which in the relaxed state of the coupling system (100, 400, 600) is spaced apart from the connecting element (117, 129, 501, 503) by a distance greater than a length of the spring-travel delimiter (115, 127).

3. Coupling system (100, 400, 600) according to Claim 1 or 2,
**characterized**
**in that** the securing element (109, 121) is a fixed material protrusion of the rod (119, 505) that ends in a region which in the relaxed state of the coupling system (100, 400, 600) is spaced apart from the connecting element (117, 129, 501, 503) by a distance greater than a length of the spring-travel delimiter (115, 127).

4. Coupling system (100, 400, 600) according to one of the preceding claims,
**characterized**
**in that** the spring-travel delimiter (115, 127) is movably disposed between the connecting element (117, 129, 501, 503) and the securing element (109, 121) on the rod (119, 505), or is fixedly disposed on the securing element (109, 121).

5. Coupling system (100, 400, 600) according to one of the preceding claims,
**characterized**
**in that** the coupling system (100, 400, 600) comprises two coupling interfaces (101, 103) which are conjointly disposed on a rod (119, 505).

6. Securing system (200, 309, 311) for securing a round pressure tank (301),
wherein the securing system (209, 309, 311) comprises:
- a strap system;
- a number of coupling systems (100, 400, 600) according to one of Claims 1 to 5;
wherein the strap system comprises a multiplicity of straps (105, 107, 313, 315, 317);
wherein the strap system is configured to be connected to a first holding point (307) and a second holding point (319), and to encompass the pressure tank (301) between the first holding point (307) and the second holding point (319);
wherein the strap system is mechanically coupled to the number of coupling systems (100, 400, 600).

7. Securing system (200, 309, 311) according to Claim 6,
**characterized**
**in that** the strap system comprises a first strap (313) which on its first end is connectable to the first holding point (307), and on its second end is connected to a connecting element (117, 129, 501, 503) of a coupling system (100, 400, 600) of the number of coupling systems (100, 400, 600); and
the strap system comprises a second strap (315) which on its second end is connectable to the second holding point (319), and on its second end is connected to a connecting element (117, 129, 501, 503) of a coupling system (100, 400, 600) of the number of coupling systems (100, 400, 600) .

8. Securing system (200, 309, 311) according to Claim 6,
**characterized**
**in that** the securing system (200, 309, 311) comprises a first coupling system (100, 400, 600) according to Claim 6, and a second coupling system (100, 400, 600) according to Claim 6; and
the strap system comprises three straps (313, 315, 317); wherein a first strap (313) of the strap system on its first end is connectable to the first holding point (307), and on its second end is connected to a first connecting element (117) of the first coupling system (100);
wherein a second strap (315) of the strap system on its first end is connected to a second connecting element (129) of the first coupling system (100), and on its second end is connected to a first connecting element of the second coupling system (100, 400, 600);
wherein a third strap (317) of the strap system on its first end is connected to a second connecting element of the second coupling system (100, 400, 600), and on its second end is connectable to the second holding point (319).

9. Pressure tank system (300) for storing a fluid, wherein the pressure tank system (300) comprises:
- a round pressure tank (301);
- a frame (303) having a first holding point (307) and a second holding point (319);
- a securing system (200) according to one of Claims 6 to 8;
wherein the securing system (200) encases the pressure tank (301) at least in regions; and
wherein the securing system (200) is connected to the first holding point (307) and the second holding point (319).

10. Method for securing a pressure tank (301),
in which method a pressure tank (301) having a securing system (200) according to one of Claims 6 to 8 is secured on a number of holding points (307, 319).

## Revendications

1. Système d'accouplement (100, 400, 600) destiné à accoupler mécaniquement des sangles (105, 107, 313, 315, 317),
le système d'accouplement (100, 400, 600) comprenant un nombre d'interfaces d'accouplement (101, 103) et une seule barre (119, 505),
chaque interface d'accouplement (101, 103) du nombre d'interfaces d'accouplement (101, 103) comprenant :
- un élément de liaison (117, 129, 501, 503),
- un élément de sécurisation (109, 121),
l'élément de liaison (117, 129, 501, 503) étant disposé de manière mobile sur la barre (119, 505) et étant configuré pour être relié à une sangle (105, 107, 313, 315, 317),
l'élément de sécurisation (109, 121) étant disposé de manière fixe sur la barre (119, 505),
**caractérisé en ce que** chaque interface d'accouplement (101, 103) comprend en outre :
- un élément à ressort (113, 125),
- un limiteur de course du ressort (15, 127),
l'élément à ressort (113, 125) étant disposé entre
l'élément de liaison (117, 129, 501, 503) et l'élément de sécurisation (109, 121),
le limiteur de course du ressort (115, 127) étant disposé sur la barre (119, 505) entre l'élément de liaison (117, 129, 501, 503) et l'élément de sécurisation (109, 121), le limiteur de course du ressort (115, 127) étant plus court que l'élément à ressort (113, 125), de sorte que le limiteur de course du ressort (115, 127) établit une liaison par adhérence entre l'élément de liaison (117, 129, 501, 503), une sangle (105, 107, 313, 315, 317) reliée à l'élément de liaison (117, 129, 501, 503) et la barre (119, 505), lorsque l'élément de liaison (117, 129, 501, 503) exerce une pression avec une force prédéfinie en direction de l'élément de sécurisation (109, 121).

2. Système d'accouplement (100, 400, 600) selon la revendication 1,
**caractérisé**
**en ce que** la barre (119, 505) présente uniquement, par zones, un filetage destiné au vissage de l'élément de sécurisation (109, 121),
l'élément de sécurisation (109, 121) étant un écrou, et le filetage se terminant dans une zone qui, dans l'état détendu du système d'accouplement (100, 400, 600), est espacée de l'élément de liaison (117, 129, 501, 503) d'une distance supérieure à une longueur du limiteur de course du ressort (115, 127).

3. Système d'accouplement (100, 400, 600) selon la revendication 1 ou 2,
**caractérisé**
**en ce que** l'élément de sécurisation (109, 121) est une saillie de matériau fixe de la barre (119, 505), laquelle se termine dans une zone qui, dans l'état détendu du système d'accouplement (100, 400, 600), est espacée de l'élément de liaison (117, 129, 501, 503) d'une distance supérieure à une longueur du limiteur de course du ressort (115, 127).

4. Système d'accouplement (100, 400, 600) selon l'une quelconque des revendications précédentes,
**caractérisé**
**en ce que** le limiteur de course du ressort (115, 127) est disposé de manière mobile sur la barre (119, 505) entre l'élément de liaison (117, 129, 501, 503) et l'élément de sécurisation (109, 121), ou est disposé de manière fixe sur l'élément de sécurisation (109, 121).

5. Système d'accouplement (100, 400, 600) selon l'une quelconque des revendications précédentes,
**caractérisé**
**en ce que** le système d'accouplement (100, 400, 600) comprend deux interfaces d'accouplement (101, 103) qui sont disposées conjointement sur une même barre (119, 505).

6. Système de sécurisation (200, 309, 311) destiné à sécuriser un réservoir sous pression rond (301),
le système de sécurisation (209, 309, 311) comprenant :
- un système de sangles,
- un nombre de systèmes d'accouplement (100, 400, 600) selon l'une quelconque des revendications 1 à 5,
le système de sangles comprenant une pluralité de sangles (105, 107, 313, 315, 317),
le système de sangles étant configuré pour être relié à un premier point de fixation (307) et à un deuxième point de fixation (319) et pour entourer le réservoir sous pression (301) entre le premier point de fixation (307) et le deuxième point de fixation (319),
le système de sangles étant mécaniquement couplé au nombre de systèmes d'accouplement (100, 400, 600).

7. Système de sécurisation (200, 309, 311) selon la revendication 6,
**caractérisé**
**en ce que** le système de sangles comprend une première sangle (313), qui peut être reliée à son premier côté à un premier point de fixation (307) et qui est reliée à son deuxième côté à un élément de liaison (117, 129, 501, 503) d'un système d'accouplement (100, 400, 600) du nombre de systèmes d'accouplement (100, 400, 600), et le système de sangles comprend une deuxième sangle (315), qui peut être reliée à son premier côté à un deuxième point de fixation (319) et qui est reliée à son deuxième côté à un élément de liaison (117, 129, 501, 503) d'un système d'accouplement (100, 400, 600) du nombre de systèmes d'accouplement (100, 400, 600).

8. Système de sécurisation (200, 309, 311) selon la revendication 6,
caractérisé
**caractérisé en ce que** le système de sécurisation (200, 309, 311) comprend un premier système d'accouplement (100, 400, 600) selon la revendication 6 et un deuxième système d'accouplement (100, 400, 600) selon la revendication 6, et
le système de sangles comprend trois sangles (313, 315, 317),
une première sangle (313) du système de sangles pouvant être reliée à son premier côté à un premier point de fixation (307) et étant reliée à son deuxième côté à un premier élément de liaison (117) du premier système d'accouplement (100),
une deuxième sangle (315) du système de sangles étant reliée à son premier côté à un deuxième élément de liaison (129) du premier système d'accouplement (100) et à son deuxième côté à un premier élément de liaison du deuxième système d'accouplement (100, 400, 600),
une troisième sangle (317) du système de sangles étant reliée à son premier côté à un deuxième élément de liaison du deuxième système d'accouplement (100, 400, 600) et pouvant être reliée à son deuxième côté à un deuxième point de fixation (319).

9. Système de réservoir sous pression (300) destiné au stockage d'un fluide,
le système de réservoir sous pression (300) comprenant :
- un réservoir sous pression rond (301),
- un cadre (303) comprenant un premier point de fixation (307) et un deuxième point de fixation (319),
- un système de sécurisation (200) selon l'une quelconque des revendications 6 à 8,
le système de sécurisation (200) entourant au moins partiellement le réservoir sous pression (301), et
le système de sécurisation (200) étant relié au premier point de fixation (307) et au deuxième point de fixation (319).

10. Procédé de sécurisation d'un réservoir sous pression (301),
un réservoir sous pression (301) étant sécurisé au niveau d'un nombre de points de fixation (307, 319) au moyen d'un système de sécurisation (200) selon l'une quelconque des revendications 6 à 8.
